# EUROPÄISCHE PATENTSCHRIFT

(11) **EP 0 463 310 B1**
(45) Veröffentlichungstag und Bekanntmachung des Hinweises auf die Patenterteilung: **04.08.1993**
(21) Anmeldenummer: 91106098.6
(22) Anmeldetag: 17.04.1991
(51) Int. Cl.: B62D 5/30

(54) **Verfahren zum Betrieb einer Lenkreinrichtung für die Hinterräder eines Kraftfahrzeugs**
Method for the operation of a steering apparatus for the rear wheels of a motor vehicle
Procédé pour le fonctionnement d'un dispositif de direction pour les roues arrières d'une voiture

(30) Priorität: 28.06.1990 DE 4020567
(43) Veröffentlichungstag der Anmeldung: 02.01.1992
(73) Patentinhaber: Bayerische Motoren Werke Aktiengesellschaft, 80788 München (DE)
(72) Erfinder: Donges, Edmund, Dr., W-8080 Fürstenfeldbruck (DE); Auffhammer, Reinhard, W-8060 Dachau (DE)
(74) Vertreter: Dirscherl, Josef

(56) Entgegenhaltungen:
- EP-A- 0 316 932
- EP-A- 0 328 002
- EP-A- 0 350 020
- DE-A- 3 625 907
- DE-A- 3 816 254
- DE-A- 3 825 280
- GB-A- 2 222 990

## Beschreibung

Die Erfindung bezieht sich auf ein Verfahren nach dem Oberbegriff des Patentanspruchs 1.

Aus der DE-OS 3825280 ist es bekannt, im Fehlerfall die erforderliche Notfallmaßnahme abhängig vom auftretenden Fehler unterschiedlich zu wählen. Es ist ferner aus der DE-OS 3816254 bekannt, im Notfall ein Notbetriebskonzept durchzuführen, bei dem die Lenkwinkel der Hinterräder notfallgerecht gesteuert werden. Als Beispiel hierzu ist angegeben, den Lenkwinkel verzögert auf 0 zu steuern oder starr auf dem zuletzt eingestellten Wert, der in der Regel ungleich 0 ist, festzuhalten.

In beiden Fällen führt das Notbetriebskonzept zwar dazu, ein mögliches Eigenleben der Hinterräder im Notfall zu verhindern und fahrdynamisch problematische Betriebszustände des Kraftfahrzeugs auszuschließen. Es ist jedoch nicht völlig auszuschließen, daß das Auftreten des Notfalls, das in der Regel für den Fahrzeugbenutzer nicht erkennbare Ursachen besitzt, für den Fahrzeugbenutzer deutlich spürbar ist.

Der Erfindung liegt die Aufgabe zugrunde, ein Verfahren der eingangs genannten Art zu schaffen, das eine Notfallmaßnahme fahrdynamisch unkritisch durchführt.

Die Erfindung löst diese Aufgabe durch die Merkmale des Patentanspruchs 1.

Wesentlich für die Erfindung ist, daß bei einem Notfall, d.h. einen Fehler eines für die Lenkeinrichtung maßgeblichen Eingangsparameters oder Bauteils, die Hinterräder z.B. nicht schlagartig auf den Lenkwinkel 0 zurückgeführt bzw. mit dem momentan vorliegenden Lenkwinkel eingefroren werden, sondern weiterhin das normale Lenkverhalten im Prinzip zeigen lediglich mit dem Unterschied einer sich ständig verringernden Amplitude der Lenkbewegungen. Es erfolgt somit ein gleitender Übergang auf den Lenkwinkel 0, dem noch die jeweilige Lenkbewegung hinsichtlich ihrer Tendenz und ihrer Richtung entsprechend der Lenkbewegung im Normalfall überlagert ist. Es ist dabei auch möglich, den Lenkwinkel 0 kurzzeitig einzustellen bzw. zu überfahren, sofern dies aufgrund des Lenkverhaltens der Vorderräder erforderlich ist, anschließend daran die Hinterräder sogar in der Gegenrichtung einzustellen und anschließend den Wert 0 mit sich ständig verringerndem Lenkwinkelbetrag anzusteuern.

Vorteilhafte Ausgestaltungen der Erfindung sind in den Patentansprüchen 2 bis 5 wiedergegeben. Die Maßnahme nach dem Patentanspruch 2 beinhaltet die Berücksichtigung der Schwere des auftretenden Fehlers und kann im Extremfall darin bestehen, den Lenkwinkel 0 innerhalb möglichst kurzer Zeit einzustellen.

Entsprechend kann bei der Maßnahme nach Patentanspruch 3 auch die Fahrzeuggeschwindigkeit berücksichtigt werden.

Durch die Ausgestaltung dieser Maßnahme entsprechend Patentanspruch 4 lassen sich fahrdynamische Störeinflüsse, die durch, die durch die Zurücknahme des Lenkwinkels der Hinterräder bei hohen Geschwindigkeiten auftreten, sicher vermeiden. Entsprechend kann auch umgekehrt insbesondere bei einem schweren Fehler die fahrzeuggeschwindigkeitsabhängige Verringerung der angesprochenen Zeit fahrdynamisch günstig sein.

Der Patentanspruch 5 enthält eine grundsätzliche Maßnahme, um bei tatsächlichen oder vermeintlichen transienten Fehlern keine Notfallmaßnahme durchzuführen.

Der Patentanspruch 6 liefert hierzu vorteilhafte Ausgestaltungen, durch die den unterschiedlichen Anforderungen an das Verfahren Rechnung getragen wird. Fehler geringer Schwere oder niedrige Fahrzeuggeschwindigkeiten ermöglichen einen entsprechend langen zeitlichen Verzug, während bei schweren Fehlern bzw. hohen Fahrzeuggeschwindigkeiten nur ein geringer zeitlicher Verzug möglich ist. Im ersten Fall wird die erfindungsgemäße Notfallmaßnahme, d.h. die angepaßte Einstellung des Lenkwinkels 0 der Hinterräder, nur dann durchgeführt, wenn der Fehler tatsächlich bleibend auftritt. Im zweiten Fall lassen sich, aus dem Gebot der sicheren Fahrdynamik heraus, nur sehr kurze transiente Fehler ausblenden.

Der Patentanspruch 7 schließlich gibt eine besonders einfach zu realisierende Möglichkeit an, die Erfindung auszuführen.

In der Zeichnung ist die Erfindung anhand eines Schaubilds weiter erläutert. Es zeigt
- Fig. 1: den Verlauf einer Hinterrad-Lenkbewegungskomponente
- Fig. 2: Notfallkonzepte nach dem Stand der Technik
- Fig. 3: erfindungsgemäße Notfallkonzepte.

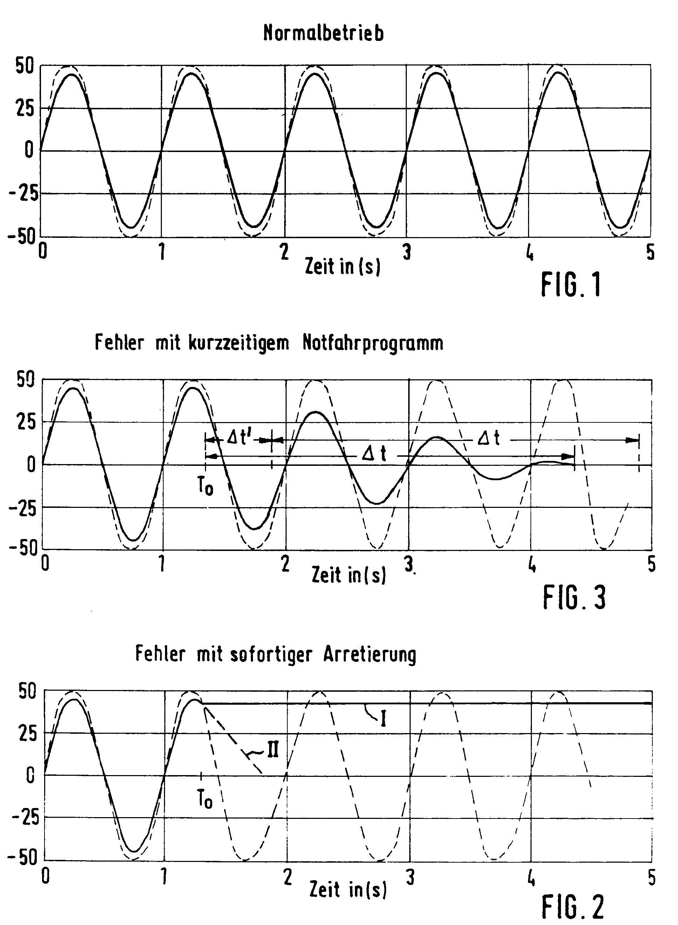

In Fig. 1 ist eine Lenkbewegung eines Hinterrads in Abhängigkeit von der Lenkbewegung der Vorderräder in Form einer Dauersinusschwingung um den Wert 0 dargestellt. Sinusschwingungen sind Bestandteile einer Lenkbewegung, die einer Fourier-Analyse unterzogen werden. Die Lenkbewegung der Vorderräder ist dabei strichliert, die der Hinterräder ausgezogen eingezeichnet.

Der Einfachheit halber ist ein proportionaler Zusammenhang zwischen den beiden Lenkbewegungen angenommen. Ein derartiger Zusammenhang findet sich häufig in bekannten Algorithmen für Hinterradlenkungen, wie sie beispielsweise auch aus der DE-OS 3624547 hervorgehen.

In einem Notfall, dessen Zeitpunkt in den Figuren 2 und 3 mit Tₒ bezeichnet ist, bestehen bekannte Notfallkonzepte, d.h. die dann durchgeführten Notfallmaßnahmen in der sofortigen Arretierung der Hinterräder beim eingestellten Lenkwinkel oder in der Rückführung des Lenkwinkels der Hinterräder auf den Wert 0 in vorgegebener Zeit. Diese beiden Fälle sind in Fig. 2 mit I bzw. II wiedergegeben. In beiden Fällen I und II ist der Lenkwinkel der Hinterräder mit Auftreten des Fehlers, d.h. ab dem Zeitpunkt Tₒ von dem der Vorderräder völlig entkoppelt. Dies macht sich insbesondere bei Änderungen des Vorderrad-Lenkwinkels störend und unangenehm bemerkbar.

Im Gegensatz dazu wird bei der erfindungsgemäßen Notfallmaßnahme die Kopplung zwischen Vorder- und Hinterradlenkwinkel beibehalten. Sie wird jedoch bei Auftreten des Fehlers zunehmend geschwächt. Dies macht sich in der dargestellten Weise als gedämpfte Sinusschwingung bemerkbar. Deutlich ist zu erkennen, daß nach Auftreten des Fehlers der Lenkwinkel der Hinterräder zwar den Wert 0 annimmt. Er nimmt diesen Wert jedoch zum selben Zeitpunkt der auch bei fehlerfreiem Betrieb der Hinterrad-Lenkeinrichtung gegeben ist. Im Gegensatz zu den beiden bekannten Notfallmaßnahmen wird bei der Erfindung der Lenkwinkel 0 aber nur kurzzeitig eingestellt bzw. genau genommen nur überfahren. Anschließend daran wird der Lenkwinkel sogar entsprechend dem Lenkwinkel der Vorderräder ggf. auch in der entgegengesetzten Richtung eingestellt. Lediglich die Amplitude der Sinusschwingung wird zunehmend verringert, während ihre Tendenz und beispielsweise auch die Zeit ihrer Nulldurchgänge beibehalten wird. Für den Fahrzeugbenutzer macht sich das erfindungsgemäße Notfallprogramm nicht bemerkbar, da die Abnahme der Mitkopplung der Hinterräder mit der Bewegung der Vorderräder nicht spürbar ist.

Die gilt insbesondere dann, wenn diese Abnahme der Mitkopplung entsprechend der Fahrzeuggeschwindigkeit mit einer Zeitspanne Δ t erfolgt, die um so größer ist, je größer die Fahrzeuggeschwindigkeit ist. Systemtechnisch bedingt kann auch die Zeit Δ t entsprechend der Schwere des Fehlers gewählt sein und bei kleinen Fehlern ebenfalls groß sein.

Die Schwere des Fehlers kann, wie bereits mehrfach ausgeführt, variieren und entsprechenden Einfluß auf den Startzeitpunkt und/oder die Zeitspanne für die Durchführung der Notfallmaßnahme, d.h. die Rückführung des Lenkwinkels der Hinterräder auf den Wert 0, haben. Unter einem leichten Fehler ist beispielsweise ein derartiger Fehler zu verstehen, der nur geringe Auswirkungen auf die Funktionsfähigkeit des Systems hat bzw. haben kann. Hierzu ist beispielsweise ein Fehler zu rechnen, der in der Unterschreitung der erforderlichen Bordnetzspannung besteht. Zum einen ist davon auszugehen, daß derartiger Fehler in der Regel nur vorübergehend ist. Zum anderen ist infolge der stets vorhandenen Betriebssicherheitsreserven anzunehmen, daß trotz einer in der Regel nur geringfügigen Unterschreitung des vorgegebenen Spannungs-Sollwertes die Funktionsfähigkeit der Lenkeinrichtung für die Hinterräder des Kraftfahrzeugs gewährleistet ist.

Anders wiederum verhält es sich bei einem schweren Fehler, der erhebliche Auswirkungen auf die Betriebs- bzw. Funktionsfähigkeit der Lenkeinrichtung hat. Hierzu ist ein Fehler zu rechnen, der einem Totalausfall der Lenkeinrichtung entspricht bzw. nahekommt. Bei einer Lenkeinrichtung, die aus Gründen der Redundanz mit zwei parallelen Rechnern arbeitet, liegt ein derartiger Fehler vor, wenn die Ausgangsergebnisse der beiden Rechner deutlich voneinander abweichen. Die Ursache hierfür kann beispielsweise im Totalausfall eines der beiden Rechner bestehen, wobei jedoch nicht zweifelsfrei zu erkennen ist, um welchen Rechner es sich dabei handelt. Im Interesse der Betriebssicherheit ist in einem derartigen Fall die Notfallmaßnahme praktisch unverzüglich nach dem Erkennen des fehlerhaften Betriebszustands einzuleiten und innerhalb möglichst kurzer Zeit auch zu beenden. In diesem Fall dominiert die Betriebssicherheit über die Möglichkeit, einen evtl. nur vorübergehenden Fehler durch einen entsprechend lang gewählten Verzug für den Beginn der Notfallmaßnahme auszublenden.

Der zeitlicher Verzug Δ t' für den Beginn der Notfallmaßnahme ist in Fig. 3 andeutungsweise dargestellt. Sofern der Fehler wiederum beim Zeitpunkt Tₒ auftritt bzw. mit Hilfe geeigneter Einrichtungen erkannt wird, beginnt zu diesem Zeitpunkt der Verzug Δt'. An seinem Ende beginnt die dargestellte Notfallmaßnahme in Form der Rückführung des Hinterradlenkwinkels auf den Wert 0, die nach der Zeitspanne Δ t abgeschlossen ist. Diese Zeitspanne ist gegenüber dem eingezeichneten Fall des sofortigen Beginns der Notfallmaßnahme unverändert. Sie kann aber, wie bereits ausgeführt, wie der Verzug Δ t' abhängig von der Schwere des Fehlers und/oder der Fahrzeuggeschwindigkeit sein.

## Patentansprüche

1. Verfahren zum Betrieb einer Lenkeinrichtung für die Hinterräder eines Kraftfahrzeugs, die im Normalfall entsprechend der Lenkbewegung der Vorderräder und im Notfall notfallgerecht gesteuert werden, dadurch gekennzeichnet, daß die Hinterräder im Notfall mit zeitlich zunehmend sich verringender Abhängigkeit von der Lenkbewegung der Vorderräder auf den Lenkwinkel 0 eingestellt werden.

2. Verfahren nach Anspruch 1, dadurch gekennzeichnet, daß die Zeitspanne ( Δ t) zur Einstellung des Lenkwinkels 0 im Notfall von der Stärke des Fehlers abhängt und um so kleiner ist, je schwerer der Fehler ist.

3. Verfahren nach Anspruch 1 oder 2, dadurch gekennzeichnet, daß die Zeitspanne ( Δ t) in Abhängigkeit von der Fahrzeuggeschwindigkeit gesteuert wird.

4. Verfahren nach Anspruch 3, dadurch gekennzeichnet, daß die Zeitspanne ( Δ t) um so größer ist, je größer die Fahrzeuggeschwindigkeit ist.

5. Verfahren nach einem der Ansprüche 1 bis 4, dadurch gekennzeichnet, daß die Zeitspanne (Δt) mit zeitlichem Verzug (Δ t') nach dem Erkennen eines Fehlers beginnt.

6. Verfahren nach Anspruch 5, dadurch gekennzeichnet, daß der zeitliche Verzug ( Δ t') abhängig von der Fahrzeuggeschwindigkeit und/oder der Schwere des Fehlers ist.

7. Verfahren nach einem der Ansprüche 1 bis 6 dadurch gekennzeichnet, daß im Notfall ein die Amplitude der Lenkbewegung der Hinterräder bestimmender Koeffizient stetig verringert wird.

## Claims

1. A method for the operation of a steering apparatus for the rear wheels of a motor vehicle which under normal circumstances corresponds to the steering movement of the front wheels and in an emergency situation may be suitably controlled, characterised in that, in an emergency, the rear wheels are set to the steering angle 0 with decreasing dependence on the steering movement of the front wheels over the course of time.

2. A method according to Claim 1, characterised in that the time interval (Δt) for setting the steering angle to 0 is dependent, in an emergency, on the severity of the fault and decreases with increasing severity of the fault.

3. A method according to either Claim 1 or Claim 2, characterised in that the time interval (Δt) is controlled in a manner dependent on the speed of the vehicle.

4. A method according to Claim 3, characterised in that the time interval (Δt) increases with increasing speed of the vehicle.

5. A method according to any one of Claims 1 to 4, characterised in that the time interval (Δt) commences after a time delay (Δt') following recognition of a fault.

6. A method according to Claim 5, characterised in that the time delay (Δt') is dependent on the speed of the vehicle and/or the severity of the fault.

7. A method according to any one of Claims 1 to 6, characterised in that, in an emergency, a coefficient which determines the amplitude of the steering movement of the rear wheels is continuously reduced.

## Revendications

1. Procédé pour le fonctionnement d'un dispositif de direction des roues arrière d'un véhicule automobile, commandé en fonction de certaines valeurs d'entrée dans le cas normal, selon une loi spécifique en cas d'urgence, caractérisé en ce qu'en cas d'urgence, les roues arrière sont ramenées à l'angle de direction zéro, selon une fonction à décroissance accélérée du mouvement de direction des roues avant.

2. Procédé selon la revendication 1, caractérisé en ce que l'intervalle de temps (Δt) pour ramener l'angle de direction à zéro en cas d'urgence, dépend de la gravité du défaut, il est d'autant plus court que le défaut est plus grave.

3. Procédé selon la revendication 1 ou 2, caractérisé en ce que l'intervalle de temps (Δt) est commandé en fonction de la vitesse du véhicule.

4. Procédé selon la revendication 3, caractérisé en ce que l'intervalle de temps (Δt) est d'autant plus long que la vitesse du véhicule est plus élevée.

5. Procédé selon une des revendications 1 à 4, caractérisé en ce que l'intervalle de temps (Δt) démarre au bout d'un certain retard (Δt') faisant suite à la reconnaissance du défaut.

6. Procédé selon la revendication 5, caractérisé en ce que le retard (Δt') est fonction de la vitesse du véhicule et/ou de la gravité de la faute.

7. Procédé selon une des revendications 1 à 6, caractérisé en ce qu'en cas d'urgence, un coefficient déterminé réduit en permanence l'amplitude du mouvement de direction des roues arrière.
